# EUROPEAN PATENT APPLICATION

(11) **EP 2 875 938 A1**
(43) Date of publication of application: **27.05.2015**
(21) Application number: 13193789.8
(22) Date of filing: 21.11.2013
(51) Int. Cl.: B29C 70/78, B29C 67/00, B22F 3/105, B28B 1/00

(54) **Manufacturing method and manufacturing tool for reinforced structural elements**

(71) Applicant: Airbus Operations GmbH, 21129 Hamburg (DE)
(72) Inventor: Sander, Peter, 28215 Bremen (DE); Hegenbart, Matthias, 21702 Ahlerstedt (DE); Weinbuch, Carlos, 22765 Hamburg (DE); König, Helene-Hedwig, 21229 Hamburg (DE)
(74) Representative: Isarpatent

(57) **Abstract**

Manufacturing method for reinforced structural elements, the method comprising providing a reinforcement structure (15) comprising a first material, and embedding the reinforcement structure in an encasing matrix comprising a second material using additive layer manufacturing, ALM.

An apparatus for performing the metod is also disclosed.

## Description

The present invention relates to a manufacturing method and a manufacturing tool for reinforced structural elements, in particular manufactured by using additive layer manufacturing (ALM) and/or additive manufacturing (AM) processes.

Additive layer manufacturing (ALM) techniques may be used in procedures for building up three-dimensional solid objects based on digital model data. ALM employs an additive process where layers of material are sequentially built up in different shapes. ALM is currently used for prototyping and distributed manufacturing with multiple applications in engineering, construction, industrial design, automotive industries and aerospace industries.

For example, document DE 10 2009 034 566 A1 discloses a method for manufacturing a fuel tank employing a generative layer manufacturing procedure.

Currently, integral parts and components manufactured from synthetic or plastics materials by ALM processes have limited durability, stiffness and structural strength. Specifically components which need to have - due to their intended area of application - increased resistance to operating loads without failure, such as structural elements in aircraft or spacecraft, have mechanical requirements that are higher than can be guaranteed by conventional ALM technology.

Some approaches in the prior art, as exemplified by document EP 2 061 643 B1, involve methods of manufacturing a composite material, comprising growing two or more layers of reinforcement in-situ; and impregnating each layer with a matrix before growing the next layer. The method can be used as an additive layer manufacturing technique to form a component with a desired shape and physical characteristics.

The document WO 2013/136096 A1 discloses an additive manufacturing method that includes depositing a product material to form a first product layer, undertaking a fusing operation to form reinforcing regions within the first product layer, and depositing and undertaking a fusing operation on a further product layer to form a multilayered product integrally formed with reinforcing region.

One object of the invention is to provide solutions for improving the stability, durability, stiffness and/or strength of structural elements manufactured by additive manufacturing processes.

This object is achieved by a manufacturing method for reinforced structural elements having the features of claim 1 and a manufacturing tool for reinforced structural elements having the features of claim 9.

A first aspect of the invention pertains to a manufacturing method for reinforced structural elements, the method comprising providing a reinforcement structure comprising a first material, and embedding the reinforcement structure in an encasing matrix comprising a second material using additive layer manufacturing, ALM.

According to a second aspect of the invention, a reinforced structural element is provided which is manufactured by a method according to the first aspect of the invention.

A third aspect of the invention pertains to a manufacturing tool for reinforced structural elements, the manufacturing tool comprising a positioning component which includes a jig for clamping a reinforcement structure comprising a first material, and an additive layer manufacturing, ALM, robot configured to embed a reinforcement structure clamped in the jig in an encasing matrix comprising a second material.

The idea on which the present invention is based is to use additive layer manufacturing (ALM) or additive manufacturing (AM) technology on top of a reinforcement structure as a skeleton for an ALM manufactured component. The reinforcement structure provides mechanical properties which are different from the ones of the material used for ALM processing, thereby combining and integrating the advantages of different materials and structures by creating reinforced parts with internal or external skeletons.

Several advantages may be achieved by this manufacturing method. The limited performance of pure plastics parts may be overcome by integrating reinforced structures of other materials such as metals, ceramics or fibre materials. The flexibility with regard to weight, stiffness, durability, strength, abuse load resistance, crash load resistance and similar properties may be enhanced.

In particular, multi-material parts may employ additional load paths to create damage tolerant structures. Furthermore, pre-stressed structures may be fabricated that improve the structural performance, similar to pre-stressed concrete constructions. It is possible to create structures which withstand operating loads without failure by activating secondary load paths through the reinforcement structure. The reinforcement structure is able to withstand crash conditions and is sized for tensile loads.

According to an embodiment of the method, ALM may be performed using powder bed technology. Alternatively, ALM may be performed using wire feed technology.

According to a further embodiment of the method, the method may further comprise manufacturing the reinforcement structure using ALM.

According to a further embodiment of the method, the first material may comprise one or a combination of steel, polymers and composite fibre materials.

According to a further embodiment of the method, the second material may comprise one or a combination of plastics and ceramics.

According to a further embodiment of the method, embedding the reinforcement structure in an encasing matrix may comprise rotating the reinforcement structure in free space so that a surface of the reinforcement structure is oriented substantially horizontally, and performing ALM on top of the horizontally oriented surface of the reinforcement structure.

This enables the manufacturing method to become independent of restraints in handling ALM procedures and of the need for additional supporting structures limiting the fabrication freedom in shape of the manufactured components. It is no longer needed to take into account gravitational forces when building up layers of ALM material, since the reinforcement structure itself may serve as supporting basis when rotated in appropriate manner. Any form, shape or size of component may be built up using ALM without separate supporting structures. In particular, bionic structures of hybrid materials may be advantageously built with the proposed manufacturing method.

According to an embodiment of the manufacturing tool, the positioning component may be configured to rotate the clamped reinforcement structure in free space so that a surface of the reinforcement structure is oriented substantially horizontal, and the ALM robot may be configured to perform ALM on top of the horizontally oriented surface of the reinforcement structure.

The invention will be explained in greater detail with reference to exemplary embodiments depicted in the drawings as appended.

The accompanying drawings are included to provide a further understanding of the present invention and are incorporated in and constitute a part of this specification. The drawings illustrate the embodiments of the present invention and together with the description serve to explain the principles of the invention. Other embodiments of the present invention and many of the intended advantages of the present invention will be readily appreciated as they become better understood by reference to the following detailed description. The elements of the drawings are not necessarily to scale relative to each other. Like reference numerals designate corresponding similar parts.
- Fig. 1: schematically illustrates a manufacturing tool according to an embodiment of the invention.
- Fig. 2: schematically illustrates an additive layer manufacturing device.
- Fig. 3: schematically illustrates a further additive layer manufacturing device.
- Fig. 4: schematically illustrates a reinforced structural element according to a further embodiment of the invention.
- Fig. 5: schematically illustrates a reinforced structural element according to a further embodiment of the invention.
- Fig. 6: schematically illustrates a reinforced structural element according to a further embodiment of the invention.
- Fig. 7: schematically illustrates a reinforcement skeleton for a reinforced structural element according to a further embodiment of the invention.
- Fig. 8: schematically illustrates a manufacturing tool according to another embodiment of the invention.
- Fig. 9: schematically illustrates a manufacturing method for a reinforced structural element according to yet another embodiment of the invention.

In the figures, like reference numerals denote like or functionally like components, unless indicated otherwise. Any directional terminology like "top", "bottom", "left", "right", "above", "below", "horizontal", "vertical", "back", "front", and similar terms are merely used for explanatory purposes and are not intended to delimit the embodiments to the specific arrangements as shown in the drawings.

Although specific embodiments have been illustrated and described herein, it will be appreciated by those of ordinary skill in the art that a variety of alternate and/or equivalent implementations may be substituted for the specific embodiments shown and described without departing from the scope of the present invention. Generally, this application is intended to cover any adaptations or variations of the specific embodiments discussed herein.

Free form fabrication (FFF), direct manufacturing (DM) and additive manufacturing (AM) belong to a general hierarchy of layer manufacturing (LM) methods. Those methods are used to form a three-dimensional solid object by sequentially building up layers of material. Any of such procedures will be referred to in the following description as additive layer manufacturing (ALM) without loss of generality. ALM techniques usually include selectively depositing material layer by layer, selectively fusing or solidifying the material and removing excess material, if needed.

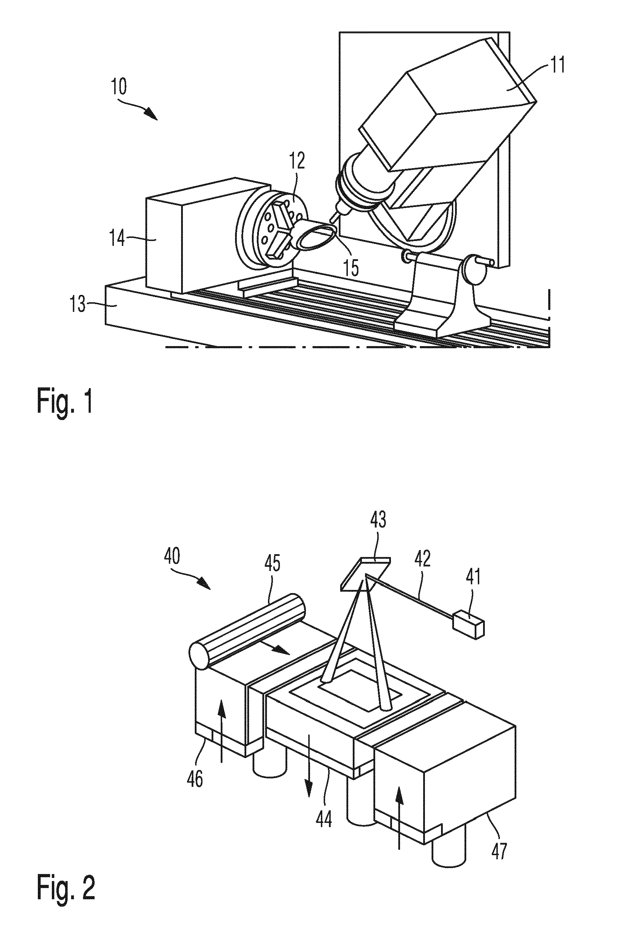

Fig. 1 shows a schematic illustration of manufacturing tool 10 for manufacturing a reinforced structural element. The manufacturing tool 10 comprises on a tool table 13 a positioning component 14 that includes a jig 12. The jig 12 may be used for clamping a reinforcement structure 15 comprising a first material. An additive layer manufacturing, ALM, robot 11 is configured to embed a reinforcement structure 15 clamped in the jig 12 in an encasing matrix comprising a second material.

With the manufacturing tool 10 of Fig. 1 it is possible to rotate the object to be printed freely in three-dimensional space using the positioning component 14 and the jig 12. That way, the positioning component 14 may be configured to rotate the clamped reinforcement structure 15 so that a surface of the reinforcement structure is oriented substantially horizontal. The reinforcement structure 15 itself provides a supporting structure for ALM material deposited thereon. The ALM robot 11 thus may be able to perform ALM on top of the horizontally oriented surface of the reinforcement structure 15.

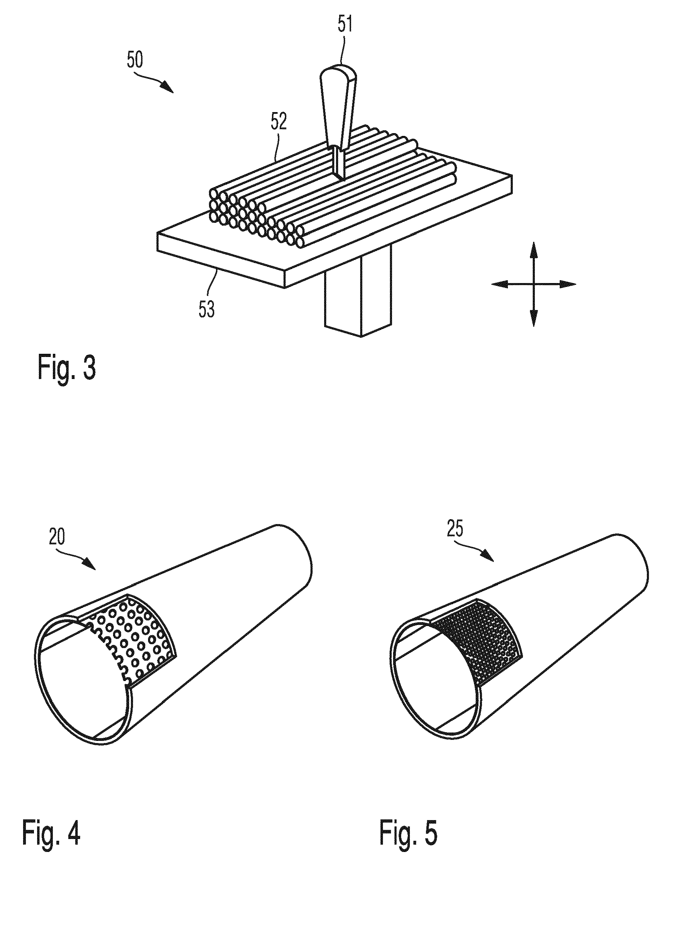

Figs. 2 and 3 show schematic illustrations of different repair tool platforms which may be employed in a manufacturing tool 10 as illustrated in Fig. 1. Fig. 2 shows a powder bed repair station 40 which comprises a laser 41, a deflection device 43, a powder bed container 44 and one or more powder feed cartridges 46, 47. A component to be repaired is placed in the powder bed of the powder bed container 44. The powder feed cartridges 46, 47 hold a basic metal powder substance comprising laser-fusible particles.

The laser 41, for example an infra-red laser, emits a laser beam 42 which is directed by a deflective device 43 including 2D scanning optics onto the powder bed container 44. The laser beam 42 defines a two-dimensional pattern in the thin bed of metal powder. At the impinging positions of the laser beam 42, the metal powder is fused to form a solid layer. Upon completion of a layer, the powder bed container 44 is lowered in vertical direction by some elevation mechanism. The powder bed is then replenished to the original level using a powder feed roller 45 which is moved horizontally in order to convey new powder from the powder feed cartridges 46, 47 and deposit a uniform layer above the previously fused layer. The process of selectively fusing the next layer is then repeated. In this iterative manner, a three-dimensional structure is progressively built up being composed of multiple two-dimensional individual layers the thickness of which is typically on the order of several tens of µm.

Another possible ALM procedure is the wire feed technology as schematically depicted in Fig. 3. A wire feed repair station 50 comprises a wire guiding device 51 which builds up layers of wire 52 onto a build-up table 53. Depending on the length, orientation and segmentation of the wires 20, any desired three-dimensional structure made from a multitude of wire pieces may be progressively built up. The wires 52 are fused together using an electron beam source, a laser source or any other suitable source for selectively coupling melting of fusing heat into the wires 52.

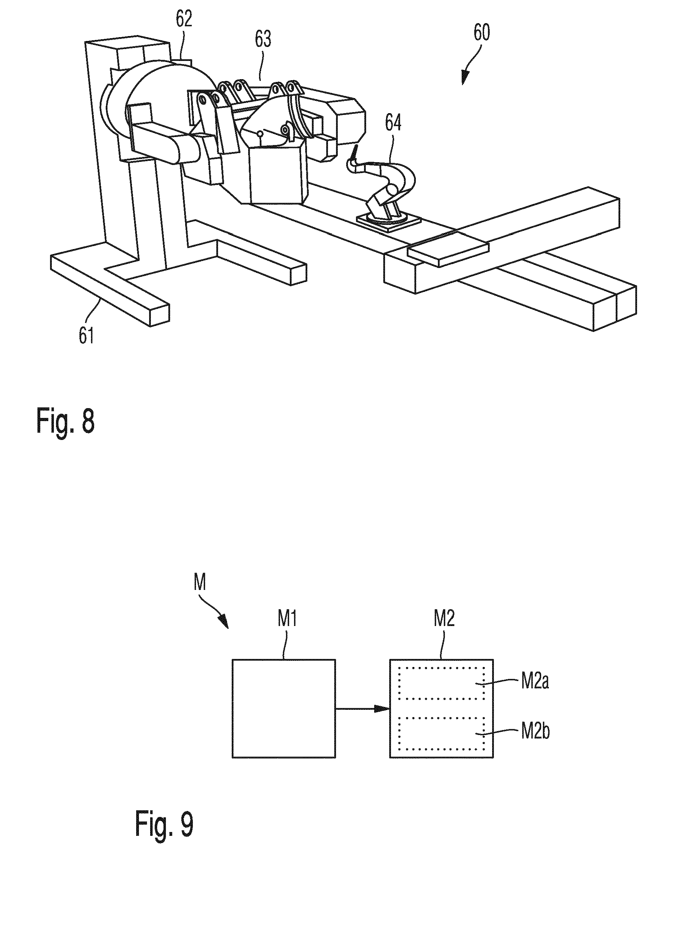

Figs. 4, 5 and 6 schematically illustrate possible reinforced structural elements as manufactured with a manufacturing tool of Figs. 1 or 8, or using a method M as explained in conjunction with Fig. 9 below.

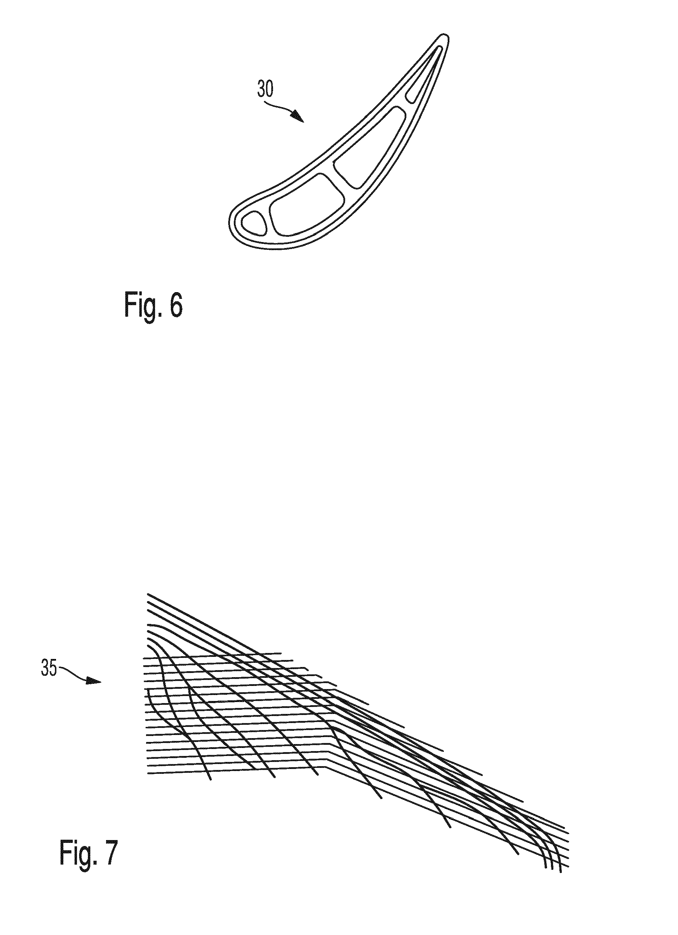

Figs. 4 and 5 illustrate tube-shaped components 20 and 25, respectively, that include a meshed reinforcement structure on their inner tube walls. Fig. 6 schematically illustrates a multi-material hybrid turbine blade 30 with internal reinforcements.

The reinforcement structures may for example be manufactured using an ALM procedure themselves. For example, the material of the reinforcement structures may comprise one or a combination of steel, polymers and composite fibre materials. The material of the ALM deposit on the reinforcement structure may comprise one or a combination of plastics and ceramics.

The reinforcement structures may for example be metal bars that are embedded within the ALM matrix for increasing the resistance of the reinforced structural element to tensile stress in particular regions of the part that are prone to cracking or similar structural failure. The reinforcement structures may also be permanently stressed in compression or tension in order to improve the final behaviour of the reinforced structural element under working loads.

For strong, ductile and durable reinforced structural elements the reinforcement structure advantageously has a high relative strength, high tolerance to tensile strain, good bonding properties to the embedding matrix, good chemical compatibility to the embedding matrix and appropriate thermal compatibility at the border between the first and second material. Moreover, it may be possible to enhance the electrical conductivity of the reinforced structural element by providing respective reinforcement structures that have a good electrical conductivity.

The material used for ALM depositing may in particular be highly corrosion resistant, resistant to high temperatures and mechanically robust.

Fig. 7 schematically illustrates a reinforcement structure 35 for a multi-material hybrid wing with bionically optimized reinforcements.

Fig. 8 schematically illustrates another manufacturing tool 60 for manufacturing reinforced structural elements. The manufacturing tool 60 comprises a tool stand 61 to which a positioning device 62 with a jig 63 is mounted. A reinforcement structure clamped into the jig 63 may be freely rotated in space using the jig 63 and the positioning device 62. An ALM robot 64 may be employed to embed a reinforcement structure clamped in the jig 63 in an encasing matrix.

The positioning component 62 may be configured to rotate the clamped reinforcement structure in free space so that a surface of the reinforcement structure is oriented substantially horizontally. Then, the ALM robot 64 may be configured to perform ALM on top of the horizontally oriented surface of the reinforcement structure.

Fig. 9 schematically illustrates a manufacturing method M for reinforced structural elements, particularly of aircraft or spacecraft. The method M may in particular be employed for manufacturing reinforced structural elements as shown in Figs. 4 to 6. The method M may be employed using a manufacturing tool as shown in Figs. 1, 2, 3 and 8.

At M1, a reinforcement structure comprising a first material is provided. At M2, the reinforcement structure is embedded in an encasing matrix comprising a second material using additive layer manufacturing, ALM.

At M2, the method M may further comprise the substeps M2a and M2b of rotating the reinforcement structure in free space so that a surface of the reinforcement structure is oriented substantially horizontally, and performing ALM on top of the horizontally oriented surface of the reinforcement structure.

In the foregoing detailed description, various features are grouped together in one or more examples or examples with the purpose of streamlining the disclosure. It is to be understood that the above description is intended to be illustrative, and not restrictive. It is intended to cover all alternatives, modifications and equivalents. Many other examples will be apparent to one skilled in the art upon reviewing the above specification.

The embodiments were chosen and described in order to best explain the principles of the invention and its practical applications, to thereby enable others skilled in the art to best utilize the invention and various embodiments with various modifications as are suited to the particular use contemplated. In the appended claims and throughout the specification, the terms "including" and "in which" are used as the plain-English equivalents of the respective terms "comprising" and "wherein," respectively. Furthermore, "a" or "one" does not exclude a plurality in the present case.

### List of reference numerals and signs

- 10: Manufacturing tool
- 11: Robot arm
- 12: Jig
- 13: Tool table
- 14: Positioning component
- 15: Reinforcement structure
- 20: Reinforced structural element
- 25: Reinforced structural element
- 30: Reinforced structural element
- 35: Reinforcement structure
- 40: Powder bed repair station
- 41: Laser
- 42: Laser beam
- 43: Deflection device
- 44: Powder bed container
- 45: Powder feed roller
- 46: Powder feed cartridge
- 47: Powder feed cartridge
- 50: Wire feed repair station
- 51: Wire guiding device
- 52: Wire
- 53: Build-up table
- 60: Manufacturing tool
- 61: Tool stand
- 62: Positioning device
- 63: Jig
- 64: Robot arm
- M: Method
- M1: Method step
- M2: Method step
- M2a: Method step
- M2b: Method step

## Claims

1. Manufacturing method (M) for reinforced structural elements, the method (M) comprising:
providing (M1) a reinforcement structure comprising a first material; and
embedding (M2) the reinforcement structure in an encasing matrix comprising a second material using additive layer manufacturing, ALM.

2. Method (M) according to claim 1, wherein ALM is performed using powder bed technology.

3. Method (M) according to claim 1, wherein ALM is performed using wire feed technology.

4. Method (M) according to one of the claims 1 to 3, further comprising:
manufacturing the reinforcement structure using ALM.

5. Method (M) according to one of the claims 1 to 4, wherein the first material comprises one or a combination of steel, polymers and composite fibre materials.

6. Method (M) according to one of the claims 1 to 5, wherein the second material comprises one or a combination of plastics and ceramics.

7. Method (M) according to one of the claims 1 to 6, wherein embedding (M2) the reinforcement structure in an encasing matrix comprises:
rotating (M2a) the reinforcement structure in free space so that a surface of the reinforcement structure is oriented substantially horizontally; and
performing (M2b) ALM on top of the horizontally oriented surface of the reinforcement structure.

8. Reinforced structural element manufactured by a method according to one of the claims 1 to 7.

9. Manufacturing tool (10; 60) for reinforced structural elements, the tool comprising:
a positioning component (14; 62) which includes a jig (12; 63) for clamping a reinforcement structure comprising a first material; and
an additive layer manufacturing, ALM, robot (11; 64) configured to embed a reinforcement structure clamped in the jig (12; 63) in an encasing matrix comprising a second material.

10. Manufacturing tool (10; 60) according to claim 9, wherein the positioning component (14; 62) is configured to rotate the clamped reinforcement structure in free space so that a surface of the reinforcement structure is oriented substantially horizontal, and wherein the ALM robot (11; 64) is configured to perform ALM on top of the horizontally oriented surface of the reinforcement structure.
